# EUROPEAN PATENT APPLICATION

(11) **EP 1 510 783 A2**
(43) Date of publication of application: **02.03.2005**
(21) Application number: 04020676.5
(22) Date of filing: 31.08.2004
(51) Int. Cl.: G01C 19/56

(54) **Transducer, electronic equipment and method of adjusting the frequency of the transducer**

(30) Priority: 01.09.2003 JP 2003308693; 22.06.2004 JP 2004183654
(71) Applicant: SEIKO EPSON CORPORATION, Shinjuku-ku, Tokyo 163-0811 (JP)
(72) Inventor: Eguchi, Makoto, Suwa-shi Nagano-ken, 392-8502 (JP); Kanna, Shigeo, Suwa-shi Nagano-ken, 392-8502 (JP)
(74) Representative: Hoffmann, Eckart, Dipl.-Ing.

(57) **Abstract**

A transducer (10) including a pair of oscillating reeds (1a, 1b) extending in the Y-direction for generating a first oscillation for generating a Coriolis force corresponding to the rotation of the transducer (10), a beam (2) extending in the X-direction and connected to the pair of oscillating reed (1a, 1b), a first detecting unit (6) provided on the beam (2) for detecting deformation of the beam (2) due to a second oscillation of the pair of oscillating reeds caused by the Coriolis force, a base member (5) for supporting the beam (2), a first connecting device (3) for connecting one end (2a) of the beam (2) and the base member (5), and a second connecting device (4) for connecting the other end of the beam (2) and the base member (5).

## Description

The present invention relates to a transducer such as a gyroscope, electronic equipment provided with the transducer, and a method of adjusting the frequency of the transducer.

JP-A-7-69180 discloses a transducer including a base portion connected to an arm member for generating oscillation corresponding to the rotation of the transducer, the base portion being fixed to a base member via a supporting member provided at the center of the base portion so as to project therefrom, the supporting member detecting torsional oscillation, whereby the rotation of the transducer is detected.

JP-A-10-160479 discloses a method of adjusting the frequency of a transducer including the steps of changing the mass of respective oscillating strips by adding a mass to the distal end of an oscillating strip for excitation or an oscillating strip for detection or by removing the added mass, thereby adjusting the frequency of the excited oscillation and the frequency of the detected oscillation.

However, in the transducer of JP-A-7-69180, there is a problem in that the oscillation of the arm member is apt to concentrate at the single supporting member provided at the center of the base portion as described above and hence to leak to the base member, whereby oscillation is impaired and hence detection of the rotation of the transducer with high degree of accuracy is difficult.

Also, there is a problem in that torsional the oscillation cannot be detected with high degree of accuracy since the angular speed is detected by the supporting member located apart from the oscillating strip.

Furthermore, according to the method of adjusting frequency in JP-A-10-160479, even when an attempt is made to adjust the difference between the frequency of the excited oscillation and the frequency of the detected oscillation within a predetermined range, there might be the case in which the frequency cannot be sufficiently adjusted, thereby lowering process yield since the adjusting range is small in addition to the fact that the frequency of the excited oscillation and the frequency of the detected oscillation affect each other.

It is an object of the present invention to provide a transducer in which the rotation of the transducer can be detected with high degree of accuracy, and to provide electronic equipment having such a transducer. It is another object to provide a method of adjusting the frequency of the transducer by which the adjustment of the frequency is facilitated and being capable of improving the process yield.

These objects are achieved by a transducer as claimed in claim 1 and a method as claimed in claim 15. Preferred embodiments of the invention are subject-matter of the dependent claims.

According to the transducer of the present invention, since the beam connected to the oscillating reed or reeds is connected at one end thereof to the base member by the first connecting device and is connected at the other end thereof to the base member by the second connecting device, leakage of the second oscillation due to the Coriolis force can be reduced in comparison with the prior art transducers, which do not have the configuration of the transducer according to the present invention. Accordingly, deformation of the beam generated by the second oscillation increases in comparison with that of prior art transducers, whereby the rotation of the transducer can be detected with high degree of accuracy.

The frequency of the first (driving) oscillation of the oscillating reed(s) can be adjusted by adjusting the mass at the end of an elongate portion of the or one of the oscillating reeds, and the difference between the frequency of the first oscillation and the frequency of the second (detected) oscillation can be adjusted by adjusting the mass at the other portion of the oscillating reed. Accordingly, a transducer that can secure the preferable performance is provided.

Preferred embodiments of the present invention will be described below in detail with reference to the drawings, in which:
- Fig. 1: shows the structure of a transducer according to a first embodiment;
- Fig. 2: shows a driving mode of the transducer of the first embodiment;
- Fig. 3: shows a detecting mode of the transducer of the first embodiment;
- Fig. 4: shows another position of a detecting unit of the first embodiment;
- Fig. 5: is the structure of a transducer according to a second embodiment;
- Fig. 6: shows the structure of a transducer according to a third embodiment;
- Fig. 7: shows another position of a detecting unit of the third embodiment;
- Fig. 8: shows the structure of a transducer according to a fourth embodiment;
- Fig. 9: shows another position of a detecting unit of the fourth embodiment;
- Fig. 10: shows still another position of the detecting unit of the fourth embodiment;
- Fig. 11: shows the structure of a transducer according to a modification;
- Fig. 12: shows the structure of a transducer according to another modification;
- Fig. 13: shows the structure of a transducer according to still another modification;
- Fig. 14: shows the structure of a transducer according to further modification;
- Fig. 15: shows the structure of the packaged transducer according to the first embodiment;
- Fig. 16: shows the structure of applied equipment according to the embodiment;
- Fig. 17: shows a method of adjusting the frequency of a transducer according to a fifth embodiment;
- Fig. 18: shows variations in frequency in the method of adjusting the frequency of the transducer according to the fifth embodiment.
- Fig. 19: shows the structure of the transducer according to a modification.

In the following description, reference will be made to X, Y and Z axes. These are axes of a Cartesian coordinate system as defined by the respective drawings.

### Embodiment 1

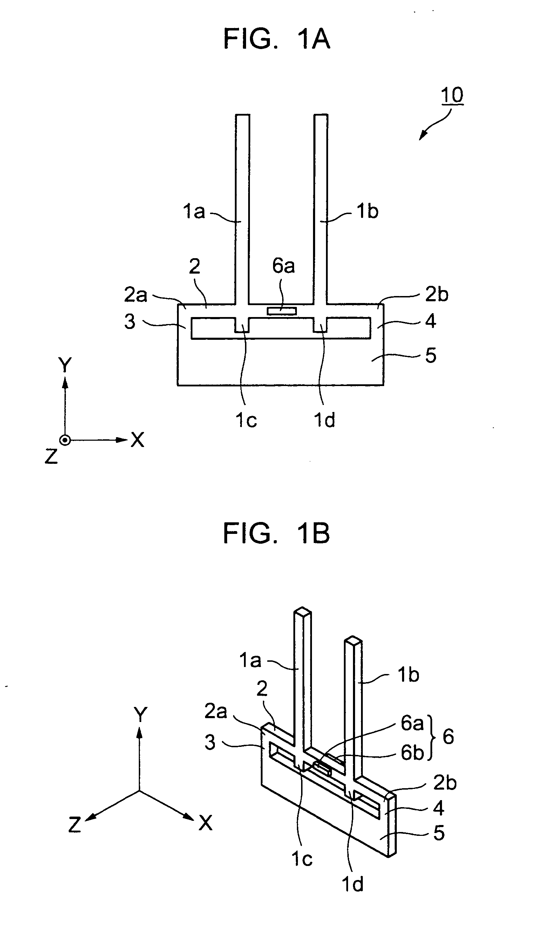

Fig. 1A and Fig. 1B are a front view and a perspective view showing the structure of a transducer according to a first embodiment. The transducer 10 of this first embodiment generates oscillation (hereinafter referred to as "driving oscillation") for generating a Coriolis force corresponding to the rotation about the Y-axis and another oscillation (hereinafter referred to as "detecting oscillation") for detecting the rotation caused by the Coriolis force. The transducer 10 includes a pair of oscillating reeds 1a, 1b as oscillating elements of the transducer, a beam 2, a first connecting device (connecting member) 3, a second connecting device (connecting member) 4, a base member 5, and a detecting unit 6.

The pair of oscillating reeds 1a, 1b are rod-shaped members formed of crystal that extend along the Y-axis in parallel to each other and having a predetermined length.

The beam 2 is a rod-shaped member formed of crystal that extends in parallel with a virtual plane (XY plane), which includes the pair of oscillating reads 1a, 1b, in the X-axis direction which is perpendicular to the Y-axis and has a predetermined length. The beam 2 intersects the pair of oscillating reeds 1a, 1b. Accordingly, one end 2a and the other end 2b of the beam 2 are not positioned between the oscillating reeds 1a, 1b, and, on the other hand, the lower portion 1c of one oscillating reed 1a and the lower portion 1d of the other oscillating reed 1b project downwardly of the beam 2.

A first connecting device 3 and a second connecting device 4 are rod-shaped members formed of crystal that extend along the Y-axis direction and have a predetermined length. The first connecting device 3 connects the end 2a of the beam 2 and the base member 5, and on the other hand, the second connecting device 4 connects the other end 2b of the beam 2 and the base member 5.

The base member 5 is a member formed of crystal that has a laterally elongated rectangular parallelepiped shape for supporting the beam 2, which holds the oscillating reeds 1 a, 1b, via the first connecting device 3 and the second connecting device 4.

A detecting unit 6 includes detecting electrodes 6a, 6b provided at portions of the beam 2 substantially at the respective center of each of two surfaces of the beam 2 (the front surface and the back surface) that extend in parallel with the virtual plane (XY plane). The detecting unit detects a deformation of the beam 2 generated by the detecting oscillation of the pair of oscillating reeds 1a, 1b according to the principle of piezoelectricity, which is known per se.

The pair of oscillating reeds 1a, 1b include driving elements, not shown, for exciting driving oscillation in a manner known per se.

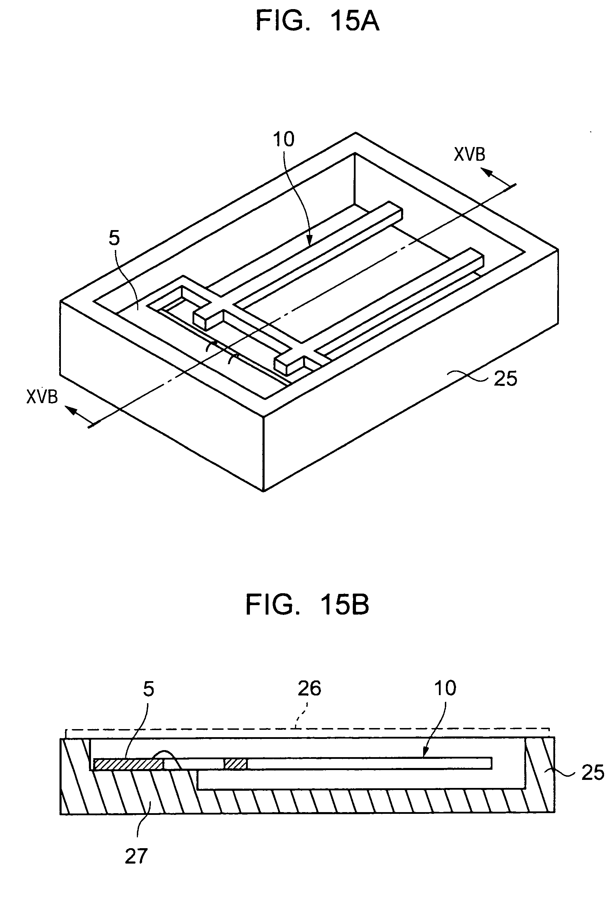

Fig. 15A is a perspective view showing the transducer 10 in a container 25, and Fig. 15B is a cross-sectional view taken along the line XVB-XVB in Fig. 15A.

The container 25, formed of ceramics, for example, has an open side (the top side in the drawing) and is formed with a recess in a part of its bottom face. The transducer 10 is secured to the container 25 by bonding the base member 5 of the transducer 10 onto a placing section 27 of the container 25 formed by the bottom face adjacent to the recess. The remaining part of the transducer 10 and its oscillating reeds 1a, 1b, in particular, overlie the recess. Although it is not shown in the drawings, electrical connection is established by a connecting wiring formed on the transducer and a wiring formed on the container 25 by a wire bonding process. The open upper side of the container 25 is covered and sealed by a lid 26 in a state in which the inside of the container is maintained in a vacuum or inert gas atmosphere to form a packaged transducer.

As regards the aforementioned wiring connection, it is also possible to establish the connection with a conductive adhesive agent instead of wire bonding.

It is also possible to omit the base member of the transducer 10 and to allow the placing section 27 of the container 25 to serve as a base member of the transducer 10 by extending the first connecting device 3 and the second connecting device 4 and bonding the respective terminal portions onto the placing section 27 of the container 25.

As described above, the oscillating reeds 1a, 1b have two modes of oscillation, the driving oscillation corresponding to a driving mode, and the detecting oscillation corresponding to a detecting mode. Both modes coexist when the transducer is exposed to a rotation about the Y axis.

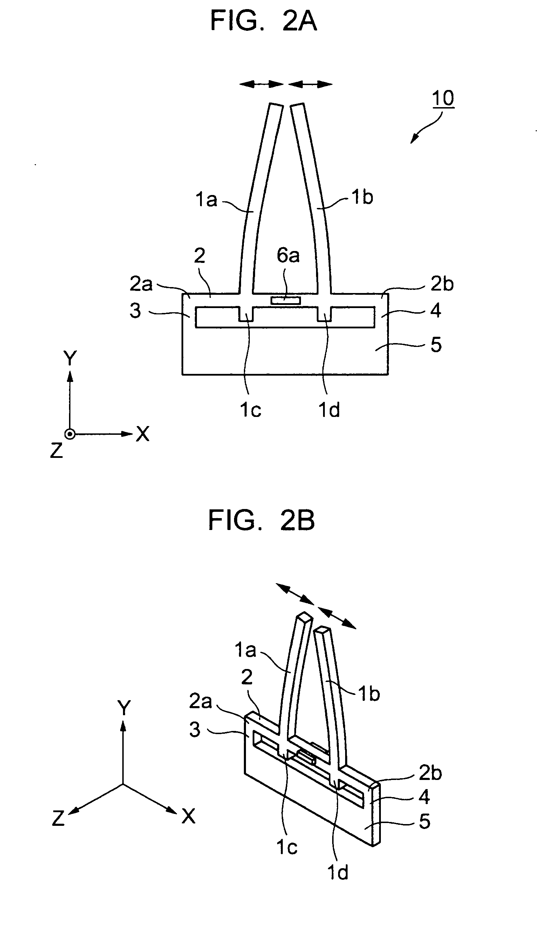

Fig. 2A and Fig. 2B are a front view and a perspective view showing the driving mode of the transducer 10 of the first embodiment, respectively. In the driving mode, the pair of oscillating reeds 1a, 1b undergo bending oscillation in a negative-phase relation with respect to each other along the X-axis direction as shown in Figs. 2A and 2B excited by the aforementioned driving elements. More specifically, as shown in Figs. 2A and "B, when the oscillating reed 1a is deformed into the "(" shape with respect to the X-axis, i.e., bent toward the oscillating reed 1b, the oscillating reed 1b is deformed into the ")" shape, i.e., bent toward the oscillating reed 1a. On the other hand, and in contrast to the illustration in Figs. 2A and B, when the oscillating reed 1a is deformed in the opposite direction into the ")" shape, the oscillating reed 1b is deformed into the "(" shape. In other words, the oscillating reeds 1a, 1b oscillates such that the distal ends thereof move toward and away from each other.

While the lower portion 1c of the oscillating reed 1a and the lower portion 1d of the oscillating reed 1b oscillate in association with the oscillation of the oscillating reeds 1a, 1b, such oscillation hardly affects the oscillation of the oscillating reeds 1 a, 1 b.

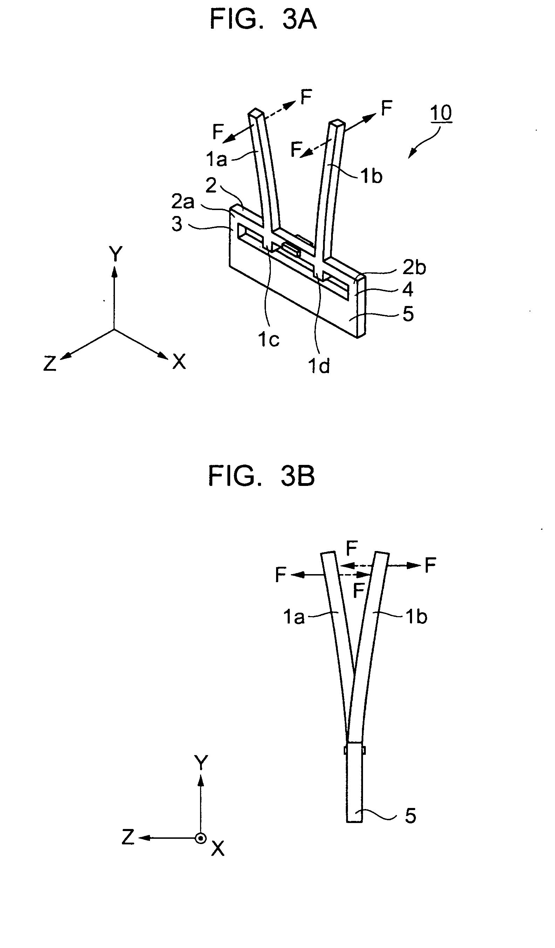

Fig. 3A and Fig. 3B are a perspective view and a side view showing the detecting mode of the transducer 10 of the first embodiment, respectively. When the transducer 10 rotates about the Y-axis while the pair of oscillating reeds 1a, 1b undergoes the driving oscillation, a Coriolis force F shown by a solid arrow in the drawing and a Coriolis force F shown by a dotted arrow are generated alternately on the pair of oscillating reeds 1a, 1b. These Coriolis forces cause the detecting mode of the transducer, i.e., the pair of oscillating reeds 1a, 1b undergo a bending oscillation along the Z-axis direction perpendicular to the aforementioned virtual plane (XY plane) in a negative-phase relation with respect to each other. More specifically, as shown in Figs. 3A and B, when the oscillating reed 1a is deformed into the ")" shape, the oscillating reed 1b is deformed into the ")" shape and, in contrast to the illustration in Figs. 3A and B, when the oscillating reed 1a is deformed into the "(" shape with respect to the Z-axis, the oscillating reed 1b is deformed into the ")" shape.

The lower portion 1c of the oscillating reed 1a and the lower portion 1d of the oscillating reed 1b oscillate slightly in association with the oscillation of the main part of oscillating reeds 1a, 1b, and the oscillation is generated in the negative-phase so as to balance the oscillation of the respective main part of the oscillating reeds 1a, 1b.

When the pair of oscillating reeds 1a, 1b undergoes the aforementioned detecting oscillation along the Z-axis direction, the beam 2 is deformed by the detecting oscillation, and, in particular, the center portion of the beam 2 is deformed to a larger extent than other portions such as portions near the two ends 2a, 2b of the beam 2. Consequently, the detecting unit 6 provided substantially at the center portion of the beam 2 detects the deformation of the beam 2, and outputs a signal indicating such deformation to a calculating circuit (not shown). The calculation circuit calculates the rotation of the transducer 10 about the Y-axis, for example, the amount, the speed, the acceleration, and the direction of the rotation by calculating the signal according to a method, which is known per se.

As described above, with the transducer 10 of the first embodiment, since the beam 2 for holding the pair of oscillating reeds 1a, 1b is coupled to the base member 5 by connecting one end 2a to the base member 5 via the first connecting device 3, and the other end 2b to the base member 5 via the second connecting device 4, leakage of the detecting oscillation generated by the Coriolis force F to the base member 5, may be prevented. Accordingly, the detecting oscillation of the pair of oscillating reeds 1a, 1b can be propagated more efficiently than is the case with the prior art transducer, which does not have the structure of the first embodiment, and hence deformation of the beam 2 caused by the detecting oscillation increase in comparison with the prior art, whereby the detecting unit 6 can detect the rotation of the transducer 10 with higher degree of accuracy than is possible in the prior art.

In addition, in the transducer 10 of the first embodiment, since the pair of oscillating reeds 1a, 1b are formed of crystal, the frequencies of the driving oscillation and the detecting oscillation of the pair of oscillating reeds 1a, 1b can be stabilized.

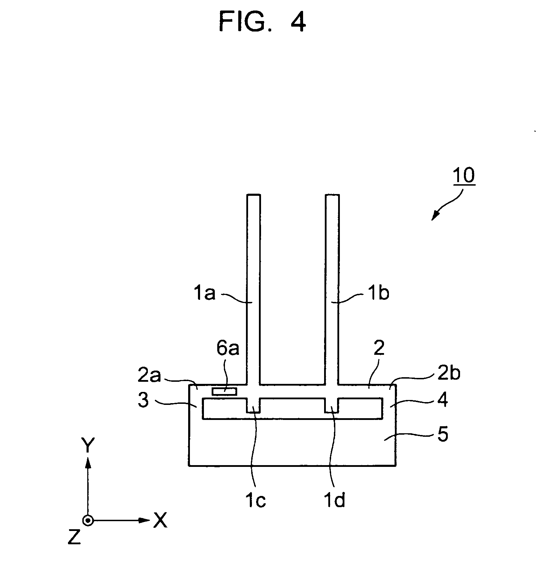

By providing the detecting unit 6, that is, the detecting electrodes 6a, 6b, at a portion other than that between the pair of oscillating reeds 1a, 1b of the beam 2, more specifically, between one end 2a of the beam 2 and one oscillating reed 1a as shown in Fig. 4 instead of providing the same substantially at the center of the beam 2 as described above, the rotation of the transducer 10 can be detected at least with higher degree of accuracy in comparison with the prior art, although it is not as accurate as the case in which the detecting unit 6 is provided substantially at the center of the beam 2.

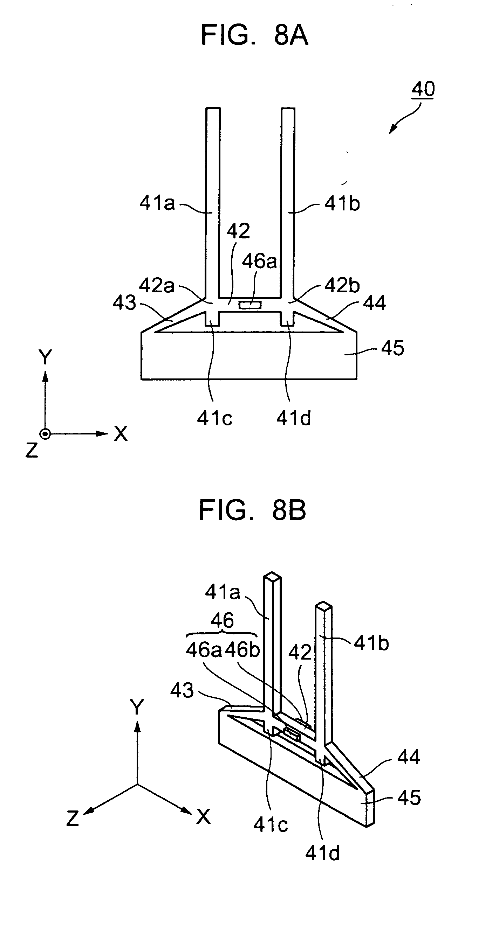

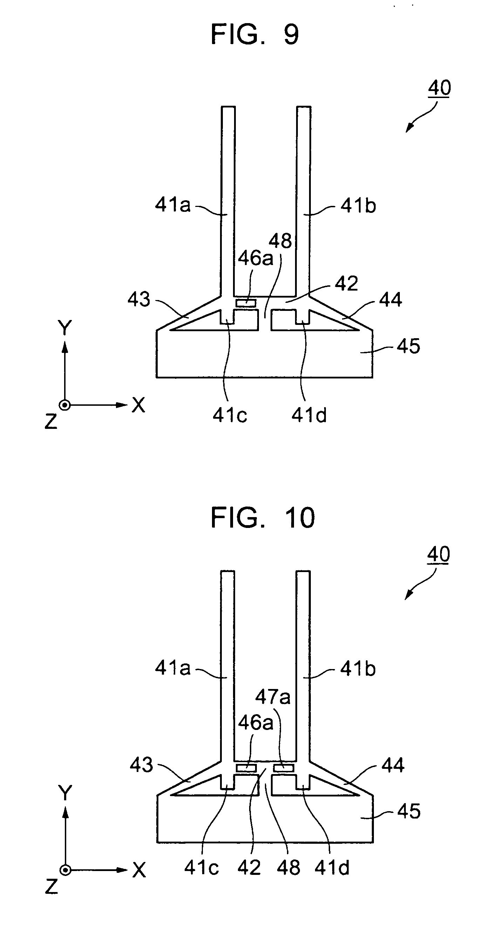

As described so far, the first connecting device 3 and the second connecting device 4 are provided in parallel along the Y-axis direction. These connecting devices may as well be provided in non-parallel relation as, for instance, in Figs. 8 and 9 described later.

The lower portions 1 c, 1d of the pair of oscillating reeds 1a, 1b can achieve the similar effects as those described above by being provided so as not to project downwardly of the beam 2 instead of being provided so as to project downwardly of the beam 2 as described above, although inertia of the oscillation of the pair of oscillating reeds 1a, 1b is slightly deteriorated.

Although the material of the transducer has been described to be crystal, which is a piezoelectric material, in the above described embodiment, it is also possible to employ a constant modulus material such as an Elinver material (an Fe-Ni-Cr alloy), or piezoelectric material such as lithium tantalate (LiTaO₃), lithium niobate (LiNbO₃), and gallium phosphate (GaPO₄).

### Second Embodiment

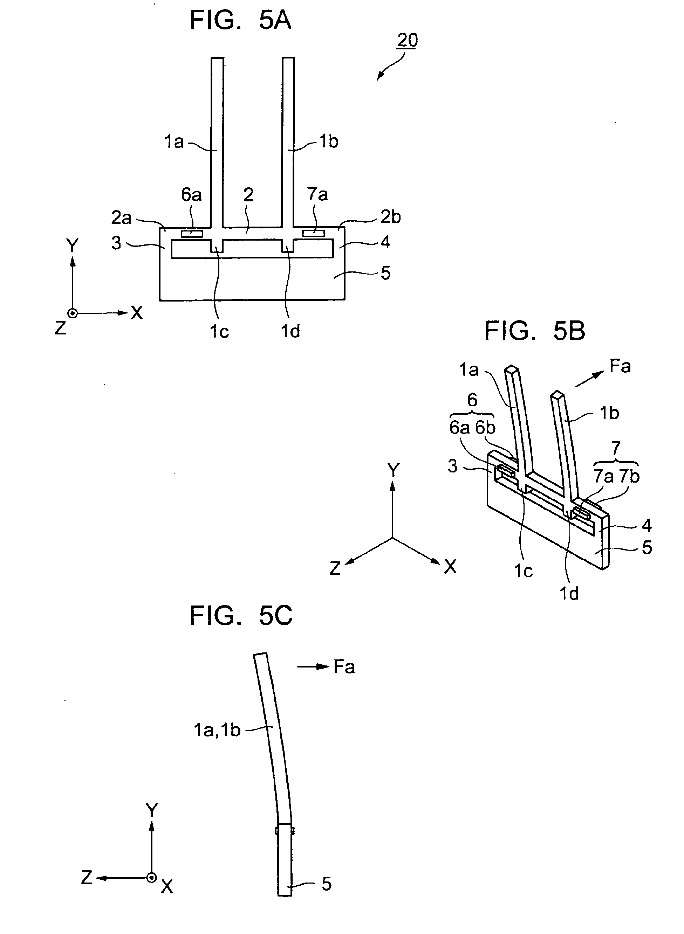

Fig. 5A, Fig. 5B, and Fig. 5C are a front view, a perspective view, and a side view showing the structure of a transducer 20 according to a second embodiment. The transducer 20 of the second embodiment includes the pair of oscillating reeds 1a, 1b, the beam 2, the first connecting device 3, the second connecting device 4, the base member 5, and the detecting unit 6 like the transducer 10 of the first embodiment. In addition, the transducer 20 includes a detecting unit 7, which is the difference from the transducer 10 of the first embodiment. The detecting unit 7 includes detecting electrodes 7a, 7b having the same structure as the detecting electrodes 6a, 6b of the transducer 10 in the first embodiment.

The detecting units 6, 7 are provided on the beam 2 at positions other than between the pair of oscillating reeds 1a, 1b. More specifically, the detecting unit 6 is provided between one end 2a of the beam 2 and the one oscillating reed 1a, and the detecting unit 7 is provided between the other end 2b of the beam 2 and the other oscillating reed 1b.

Like the detecting unit 6 of the transducer 10 of the first embodiment, in the transducer 20 of the second embodiment, the respective detecting units 6 and 7 can detect the rotation of the transducer 20 about the Y-axis by the driving oscillation, shown in Fig. 2, and detecting oscillation, shown in Fig. 3, of the pair of oscillating reeds 1 a, 1b with a degree of accuracy higher than that of the prior art. In addition to the detection of a rotation, in the transducer 20 of the second embodiment, when an acceleration Fa along the Z-axis direction, which functions as a disturbance for the rotation about the Y-axis which is to be detected under normal condition, is exerted on the transducer 20 as shown in Figs. 5A, 5B and 5C, the pair of oscillating reeds 1a, 1b are both deformed into the ")" shape along the Z-axis direction, i.e., in a positive-phase relation with respect to each other. This deformation of the pair of oscillating reeds 1a, 1b, causes a deformation of the ends 2a, 2b of the beam 2 in a negative-phase relation with respect to each other, that is, a deformation such that the signal generated by the detecting unit 6 and the signal generated by the detecting unit 7 have opposite polarity from each other. The detecting units 6, 7 output signals having the relation as describe above, and the influence of the acceleration Fa exerted in the Z-axis direction is removed by calculating and processing these two signals by the calculating circuit.

As described above, in the transducer 20 of the second embodiment, in addition to the detection of a rotation of the transducer 20 about the Y-axis as in the case of the transducer 10 of the first embodiment, the detecting units 6 and 7 provided at positions other than between the pair of oscillating reeds 1a and 1b of the beam 2 cooperate to detect a deformation in a negative-phase relation generated at the portions of the beam 2 where the detecting units 6, 7 are provided, if such deformation is caused by an acceleration Fa in the Z-axis direction. Therefore, the influence of the acceleration Fa in the Z-axis direction, which is a disturbance for the rotation about the Y-axis can be eliminated, whereby the rotation of the transducer 20 about the Y-axis can be detected with a higher degree of accuracy.

### Third Embodiment

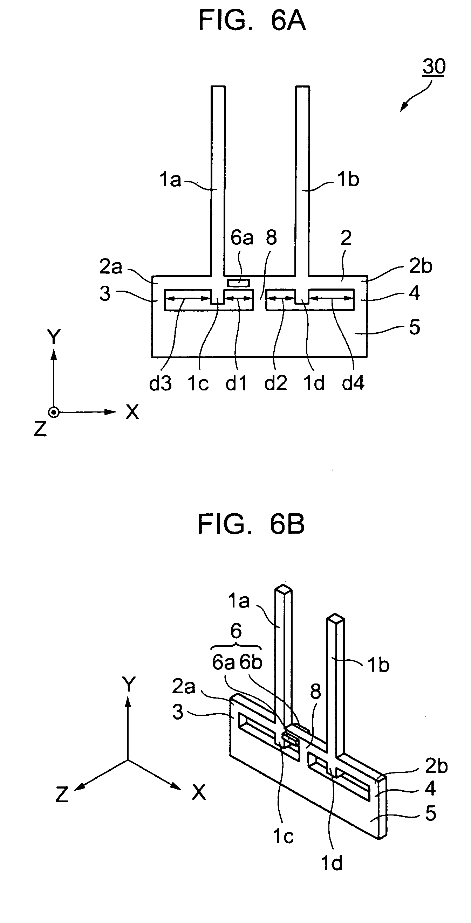

Fig. 6A and Fig. 6B are a front view and a perspective view showing the structure of a transducer 30 according to a third embodiment, respectively. The transducer 30 of the third embodiment includes the pair of oscillating reeds 1a, 1b, the beam 2, the first connecting device 3, the second connecting device 4, the base member 5, and the detecting unit 6 like the transducer 10 of the first embodiment. Additionally, the transducer 30 includes a third connecting device (connecting member) 8, which is the difference from the transducer 10.

The third connecting device 8 is a rod-shaped member formed of crystal that extends in the Y-axis direction and has a predetermined length for connecting a portion substantially in the center of the beam to the base member 5. Here, the distance d1 between one oscillating reed 1a and the third connecting device 8 and the distance d2 between the other oscillating reed 1b and the third connecting device 8 are shorter than the distance d3 between one oscillating reed 1a and one end 2a of the beam 2 and the distance d4 between the other oscillating reed 1b and the other end 2b of the beam 2. The detecting unit 6 is provided between one oscillating reed 1a and the third connecting device 8.

In the transducer 30 of the third embodiment, the detecting unit 6 detects deformation of the beam 2 at the portion of the beam 2 where the detecting unit 6 is provided, which deformation occurs corresponding to a rotation of the transducer 30 about the Y-axis as in the case of the transducer 10 of the first embodiment, whereby the rotation can be detected. In addition to the detection of the rotation, since the distances d1 and d2 are shorter than the distances d3 and d4, that is, since the oscillating reeds 1a, 1b are provided at positions closer to the third connecting device 8 than to the first connecting device 3 and the second connecting device 4, the deformation of the beam 2 caused by the detecting oscillation of the pair of oscillating reeds 1a, 1b is apt to concentrate at the third connecting device 8 or a portion in the vicinity thereof, whereby the rotation can be detected with a higher degree of accuracy.

In the transducer 30 of the third embodiment, since the third connecting device 8 for connecting the beam 2 to the base member 5 is provided, flexibility in wiring between the beam 2 and the base member 5 can be improved further in comparison with the transducer 10 in the first embodiment, which does not include the third connecting device 8.

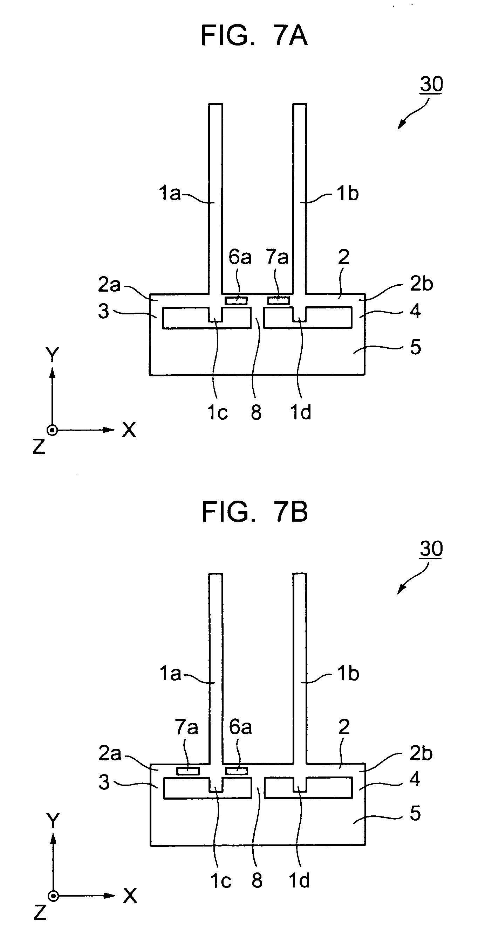

In the transducer 30 of the third embodiment, in addition to the provision of the detecting unit 6 between one oscillating reed 1a (the intersection of that one oscillating reed 1a with the beam 2) and the third connecting device 8, it is preferable to provide a another detecting unit 7 (detecting electrode 7a or the like) between the other oscillating reed 1b and the third connecting device 8 as shown in Fig. 7A, or to provide the detecting unit 7 (detecting electrode 7a or the like) between the one oscillating reed 1a and the adjacent end 2a of the beam 2 as shown in Fig. 7B. Since a deformation in a negative-phase relation with respect to the deformation of the beam 2 where the detecting unit 6 is provided, occurs at the portion of the beam 2 where the detecting unit 7 is provided, the detecting units 6, 7 can cooperate with each other to perform a detection for allowing the acceleration Fa in the Z-axis direction to be eliminated as in the case of the detecting units 6 and 7 in the transducer 20 of the second embodiment.

### Fourth Embodiment

Fig. 8A and Fig. 8B are a front view and a perspective view showing the structure of a transducer 40 according to a fourth embodiment. The transducer 40 of the fourth embodiment includes a pair of oscillating reeds 41a, 41b, a beam 42, a first connecting device 43, a second connecting device 44, a base member 45, and a detecting unit 46, corresponding to the pair of oscillating reeds 1 a, 1 b, the beam 2, the first connecting device 3, the second connecting device 4, and the base member 5 in the transducer 10 of the first embodiment.

The pair of oscillating reeds 41a, 41b are retained by the beam 42 by being connected at one end 42a of the beam 42 to one oscillating reed 41 and at the other end 42b of the beam 42 to the other oscillating reed 42b.

The first connecting device 43 connects an intersecting point between one end 42a of the beam 42 and the oscillating reed 41a with the base member 45, and the second connecting device 44 connects the intersecting point between the other end 42b of the beam 42 and the oscillating reed 41 b with the base member 45. The detecting unit 46 is provided substantially at the center portion of the beam 42.

In the transducer 40 of the fourth embodiment, the detecting unit 46 can detect the rotation of the transducer 40 about the Y-axis with a high degree of accuracy by the driving oscillation shown in Fig. 2 and the detecting oscillation shown in Fig. 3 of the pair of oscillating reeds 41 a, 41 b. In addition, in comparison with the transducer 10 of the first embodiment, the driving oscillation and the detecting oscillation of the pair of oscillating reeds 41 a, 41b can hardly leak to the first connecting device 43 and the second connecting device 44, or in other words, since the oscillation is apt to concentrate at the beam 42 on which the detecting unit 46 is provided, the rotation of the transducer 40 about the Y-axis can be detected with a higher degree of accuracy than the rotation of the transducer 10 of the first embodiment.

Instead of providing the detecting unit 46 substantially at the center of the beam 42, as shown in Fig. 9, the center portion of the beam 42 (or a portion substantially in the center) and the base member 45 can be connected by a third connecting device 48 which is similar to the third connecting device 8 described in conjunction with the third embodiment, and by providing the detecting unit 46 between one oscillating reed 41a and the third connecting device 48, the similar effects to those described above can be obtained.

In addition to provision of the detecting unit 46 at the portion of the beam 42 shown in Fig. 9, by providing a detecting unit 47 similar to the detecting unit 7 described in the second embodiment between the other oscillating reed 41 of the beam 2 and the third connecting device 48 as shown in Fig. 10, the detecting units 46, 47 can cooperate with each other like the detecting units 6, 7 in the third embodiment shown in Fig. 7 to perform detection for eliminating the acceleration in the Z-axis direction.

### Modifications

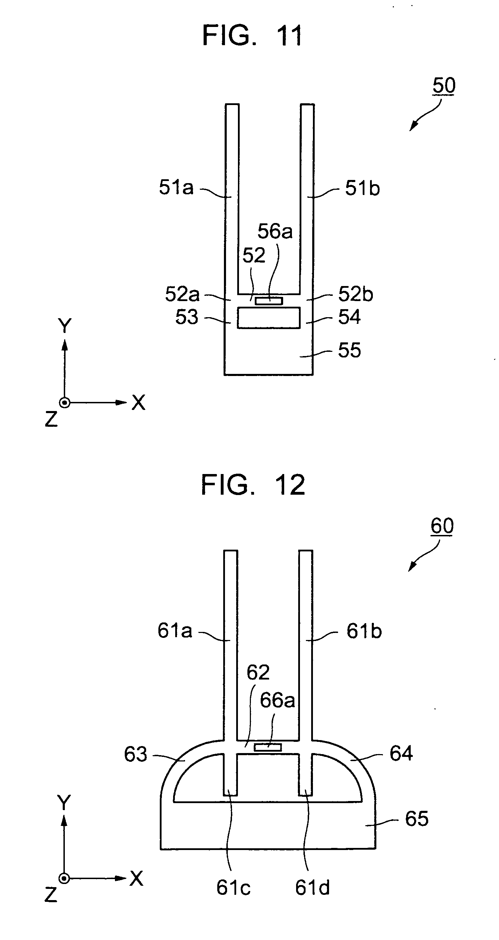

Fig. 11 is a front view showing the structure of a transducer 50 according to a first modification. The transducer 50 includes a pair of oscillating reeds 51 a, 51b, a beam 52, a first connecting device 53, a second connecting device 54, a base member 55, and a detecting unit 56 (detecting electrode 56a or the like) corresponding to the pair of oscillating reeds 1a, 1b, the beam 2, the first connecting device 3, the second connecting device 4, the base member 5, and the detecting unit 6 in the first embodiment.

The beam 52 is connected at one end 52a to one oscillating reed 51a thereby forming an intersecting point, and in the same manner, is connected at the other end 52b to the other oscillating reed 51b, thereby forming an intersecting point. The first connecting device 53 connects the former intersecting point to the base member 55, and the second connecting device 54 connects the latter intersecting point to the base member 55. Furthermore, the detecting unit 56 is provided substantially at the center portion of the beam 52.

In the transducer 50, the detecting unit 56 can detect the rotation of the transducer 50 about the Y-axis by the driving oscillation shown in Fig. 2 and the detecting oscillation shown in Fig. 3 of the pair of oscillating reed 51a, 51 as in the case of the detecting unit 6 in the transducer 10 according to the first embodiment.

Fig. 12 is a front view showing the structure of a transducer 60 according to a second modification. The transducer 60 includes a pair of oscillating reeds 61 a, 61 b, a beam 62, a first connecting device 63, a second connecting device 64, a base member 65, and a detecting unit 66 (detecting electrode 66a or the like) corresponding to the pair of oscillating reeds 41a, 41b, the beam 42, the first connecting device 43, the second connecting device 44, the base member 45 and the detecting unit 46 in the transducer 40 of the fourth embodiment.

The first connecting device 63 and the second connecting device 64 extend in a curved shape as an arc of a circle or of an oval, which is the difference from the first connecting device 43 and the second connecting device 44, which extend linearly, of the transducer 40 of the fourth embodiment 4.

In the transducer 60, the detecting unit 66 can detect the rotation of the transducer 60 about the Y-axis by the driving oscillation shown in Fig. 2 and the detecting oscillation shown in Fig. 3 of the pair of oscillating reeds 61 a, 61 as in the case of the detecting unit 46 of the transducer 40 in the fourth embodiment.

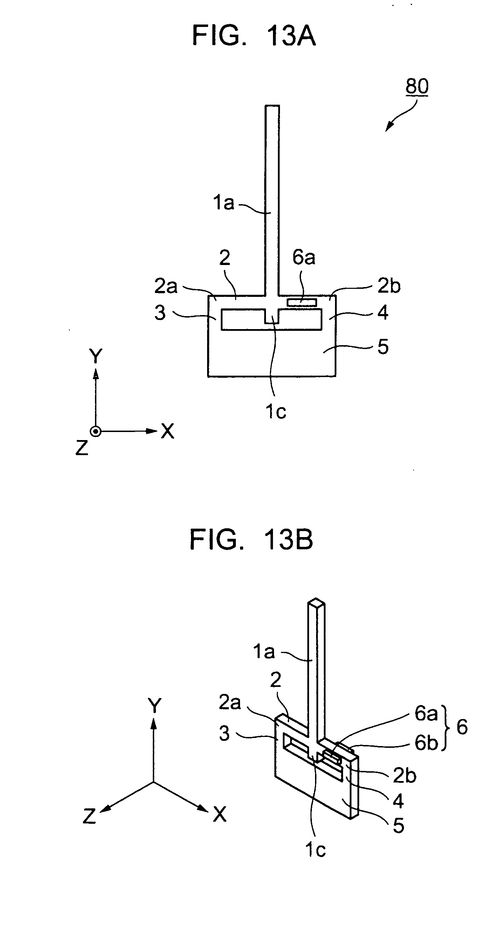

Fig. 13A is a front view showing the structure of a transducer 80 according to a third modification and Fig. 13B is a perspective view of the same.

The transducer 80 has only one of the pair of oscillating reeds of the transducer 10 in the first embodiment. The transducer 80 includes the oscillating reed 1a, the beam 2, the first connecting device 3, the second connecting device 4, the base member 5, and the detecting unit 6 (6a, 6b). The beam 2 is connected at a position intermediate between one end 2a and the other end 2b to the oscillating reed 1a, thereby forming an intersecting point. The first connecting device 3 and the second connecting device 4 connect the respective ends 2a and 2b of the beam 2 to the base member 5. Furthermore, the detecting unit 6 is provided between the end 2b of the beam 2 and the oscillating reed 1a.

In the transducer 80, a driving and a detecting oscillation of the oscillating reed 1a are the same oscillations as those of the oscillating reed 1a of the transducer 10 described in the first embodiment (See Fig. 2 and Fig. 3). The detecting unit 6 of the transducer 80 can detect the rotation of the transducer 80 about the Y-axis by the driving oscillation and the detecting oscillation of the oscillating reed 1a.

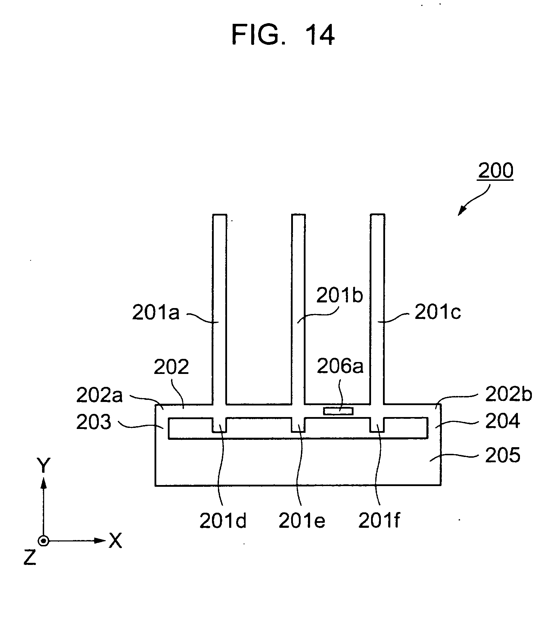

Fig. 14 is a front view showing the structure of a transducer 200 according to fourth modification.

The transducer 200 is provided with three oscillating reeds 201 a, 201 b, 201 c, a beam 202, a first connecting device 203, a second connecting device 204, a base member 205, and a detecting unit, of which only a detecting electrode 206a is shown, another detecting electrode is provided so as to oppose the detecting electrode 206a.

The beam 202 connects and holds the oscillating reeds 201a, 201b, 201c. The first connecting device 203 one end 202a of the beam 202 to the base member 205, and the second connecting device 204 connects the other end 202b of the beam 202 to the base member 205. The lower portion 201d of the oscillating reed 201a, the lower portion 201e of the oscillating reed 201b, and the lower portion 201f of the oscillating reed 201c project downwardly of the beam 202. The detecting unit (206a) is provided between the oscillating reeds 201b and 201c on the beam 202.

The driving oscillation of the oscillating reeds 201 a, 201b, 201c generates bending along the X-axis direction so that the respective adjacent oscillating reeds oscillate in the negative-phase relation. More specifically, as regards the X-axis direction, the oscillating reed 201b is deformed into the ")" shape and the oscillating reed 201c is deformed into the "(" shape when the oscillating reed 201a is deformed into the "(" shape. In other words, the oscillating reeds 201a, 201b, 201c oscillate in such a manner that the distal ends of the adjacent oscillating reeds move toward and away from each other.

As regards the driving oscillation, it is also possible to immobilize the oscillating reed 201 at the center and drive the oscillating reed 201a and the oscillating reed 201c in the negative-phase respectively.

The detecting oscillation of the oscillating reeds 201a, 201b, 201c generates bending in the negative-phase relation with respect to each other along the Z-axis direction perpendicular to the virtual plane (XY-plane). More specifically, the oscillating reed 201b is deformed into the ")" shape and the oscillating reed 201c is deformed into the "(" shape when the oscillating reed 201a is deformed into the "(" shape with respect to the Z-axis direction.

In the case where the center oscillating reed 201b is immobilized and the oscillating reed 201a and the oscillating reed 201c are driven in the negative-phase with respect to each other for the driving oscillation, the oscillating reeds 201a and 201c undergo the detecting oscillation. In other words, with the oscillating reed 201 b being immobilized, the oscillating reed 201c is deformed into the ")" shape when the oscillating reed 201a is deformed into the "(" shape with respect to the Z-axis direction.

In this manner, the detecting unit 206 of the transducer 200 can detect the rotation of the transducer 200 about the Y-axis by the driving oscillation and the detecting oscillation of the oscillating reeds.

Although the cases in which one to three oscillating reeds are provided have been described in the above-described embodiments, four or more oscillating reeds are also possible, and the same effects are achieved.

### Electronic Equipment

Subsequently, an embodiment of electronic equipment according to the present invention will be described.

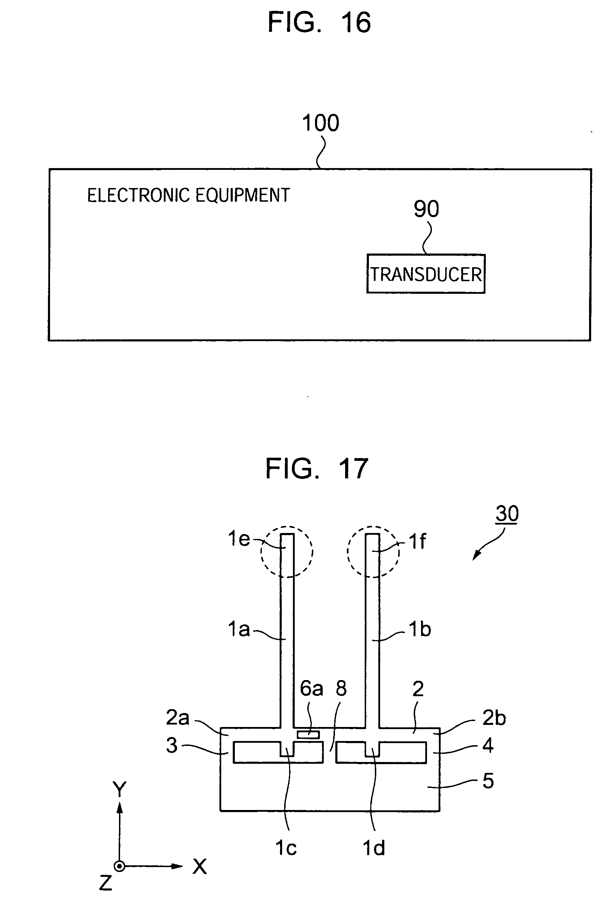

Fig. 16 is a schematic diagram of such electronic equipment. Electronic equipment 100 is provided with a transducer 90 which is any of the transducers described in the aforementioned embodiments.

The electronic equipment 100 employing the transducer according to the invention may be a mobile phone, a digital camera, a video camera, a navigation system or any other equipment, in which a detection of the posture of the equipment is required. In the electronic equipment described above, the aforementioned effects are achieved by the transducer which detects changes in posture of the electronic equipment as the change in posture of the transducer.

### Fifth Embodiment

Subsequently, an embodiment of a method of adjusting the frequency of a transducer will be described. Prior to this description, the necessity of adjustment of the frequency of a transducer such as a gyroscopic transducer will be described.

The gyroscopic transducer as described above is configured in such a manner that two types of oscillations are excited for one oscillating reed. One is the driving oscillation for driving the oscillating reed, and the other one is the detecting oscillation caused by a Coriolis force corresponding to the rotation of the oscillating reed. These vibrations differ in the direction of oscillation.

Theoretically, when the frequencies of the driving frequency and of the detecting frequency are equal, the sensitivity for detecting the angular speed of the rotation is improved to the maximum level. However, although the sensitivity for detecting the angular speed is improved, since the amplitude of oscillation increases, it takes a time until the oscillation amplitude reaches its maximum and is stabilized, and hence the detection response time for the angular speed is deteriorated. In contrast, when the difference in frequencies of the driving oscillation and of the detection oscillation increases, the detection response time is improved, but the sensitivity for detecting the angular speed is deteriorated since the S/N ratio for the case of converting the vibrations of the oscillating reed into the electric signals is lowered.

Therefore, in order to achieve a good property as a transducer, it is necessary to set the difference of frequency within a predetermined range.

Normally, the frequency for the driving oscillation (resonance frequency of driving oscillation) of the oscillating reed tends to vary due to the production difficulties. Therefore, it is necessary to adjust the frequency to a target value. Also, there is a large difference between the frequency of the driving oscillation (resonance frequency of driving oscillation) and the frequency of detecting frequency (resonance frequency of detecting oscillation), and this difference is also required to be adjusted.

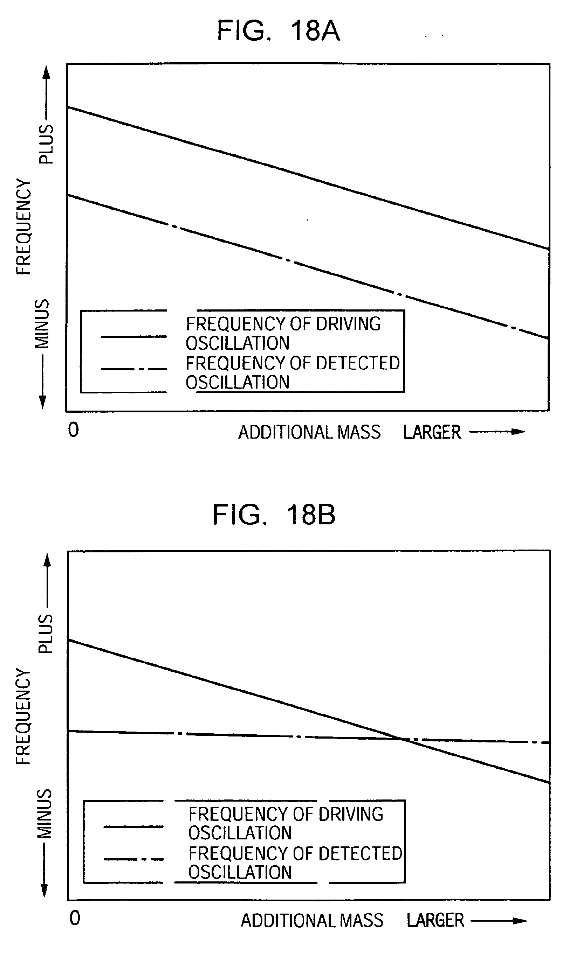

Fig. 17 is a diagram for explaining an adjustment of the frequency of the transducer. Fig. 18 is a schematic drawing explaining the state of variations in the frequency of the driving oscillation and the frequency of the detecting oscillation in the frequency adjusting operation, wherein Fig. 18A shows variations in frequency when the frequency of the driving oscillation is adjusted, and Fig. 18B shows variations in frequency when the frequency of the detecting oscillation is adjusted.

The following explanation refers to the transducer 30 of the third embodiment as representative of all the embodiments described above. In the embodiments described above, each oscillating reed has a an elongate first or upper portion extending upwardly from the beam and a relatively short second or lower portion extending downwardly from the beam.

When adjusting the frequency of the driving oscillation of the oscillating reeds 1a, 1b, a mass is added to the upper end 1e of the upper portion of the oscillating reed 1a and to the upper end 1f of the upper portion of the oscillating reed 1b for adjusting the frequency in descending direction. More specifically, metal such as Au or Ag is deposited onto the upper ends 1e and 1f of the oscillating reeds to add a mass thereto. By controlling the mass in this manner, adjustment of the frequency of the driving oscillation to a predetermined value is achieved.

At this time, as shown in Fig. 18A, as the frequency of the driving oscillation varies by addition of the mass, the frequency of the detecting oscillation varies correspondingly, and hence there is little change in difference between the two frequencies. In this manner, when the mass at the upper end 1e of the oscillating reed 1a or at the upper end 1f of the oscillating reed 1b is changed, the frequency of the driving oscillation and the frequency of the detecting oscillation affect each other, whereby the frequencies are changed.

Subsequently, a mass is added to the lower portion 1c of the oscillating reed 1a or to the lower portion 1d of the oscillating reed 1b to adjust the frequency of detecting oscillation in descending direction. More specifically, metal such as Au or Ag is deposited onto the lower portions 1c and 1d of the oscillating reeds to add the mass.

At this time, the frequency of the detecting oscillation is lowered with the addition of the mass as shown in Fig. 18B. The frequency of the driving oscillation is slightly lowered only. Accordingly, the difference between the two frequencies can be adjusted to the predetermined range. In this manner, when the mass at the lower portion 1c of the oscillating reed 1a or at the lower portion 1d of the oscillating reed 1b is changed, mainly the frequency of the detection oscillation is affected, and the frequency of the driving oscillation is little affected. In other words, in the case of the detecting oscillation, since the lower portions 1c, 1d of the oscillating reeds oscillate due to the inertia of the oscillating reeds 1a, 1b, mass added to the lower portions 1c and 1d of the oscillating reeds affects the detecting oscillation of the oscillating reeds 1a, 1b.

Also, in the above-described adjustment of the frequency, when the frequency of the driving oscillation deviates from the predetermined frequency after the difference between the frequency of the driving oscillation and the frequency of detecting oscillation has been adjusted, the frequency can be adjusted to the predetermined value by increasing the frequency by removing part of the metal by irradiating a laser beam to the metal added as a mass to the upper ends 1e and 1f of the oscillating reeds.

On the other hand, when the frequency of the driving oscillation is within the predetermined range before adjusting the frequency, what has to be done is only adjustment of the frequency of detecting oscillation, that is, adjustment of the mass of the lower portions 1c 1d of the oscillating reeds, and when the difference between the frequency of the driving oscillation and the frequency of the detecting frequency is within the predetermined range, what has to be done is adjustment of the frequency of the driving oscillation, that is, adjustment of the mass of the upper ends 1e and 1f of the oscillating reeds.

Subsequently, the structure of a modification of the transducer that can further facilitate adjustment of the frequency will be described.

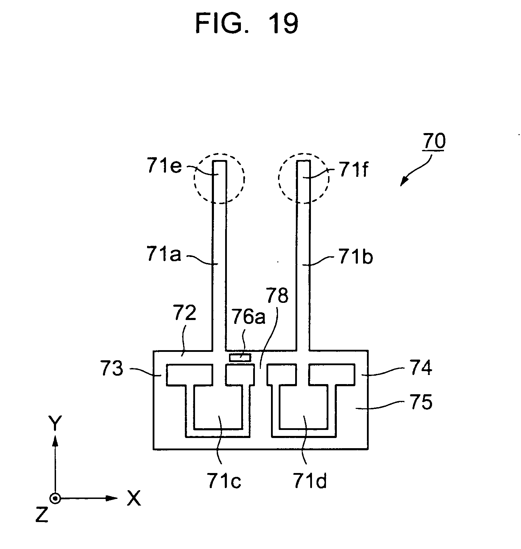

Fig. 19 is a diagram of the 70 transducer according to such modification.

The transducer 70 includes, like the transducer 30 of the third embodiment, a beam 72, a pair of oscillating reeds 71a, 71b having an elongate first or upper portion extending upwardly from the beam 72 and a relatively short second or lower portion extending downwardly from the beam 72, a first connecting device 73, a second connecting device 74, a third connecting device 78, a base member 75, and a detecting unit 76. The transducer 70 is different from the transducer 30 in that the lower portions of the oscillating reeds 71a, 71b are formed with frequency adjusting devices 71c, 71d. The distal ends of the frequency adjusting devices 71c, 71d have a larger area then the proximal ends thereof.

Adjustment of the frequencies of the oscillating reeds 71 a, 71 b is performed by adding a mass to the upper end 71e of the upper portion of the oscillating reed 71a and to the upper end 71f of the upper portion of the oscillating reed 71b to adjust the frequency of the driving oscillation. Subsequently, adjustment of the frequency of the detecting oscillation is performed by adding a mass to the frequency adjusting device 71c at the lower portion of the oscillating reed 71a or the frequency adjusting device 71d at the lower portion of the oscillating reed 71 b. In the transducer 70, since the mass can be added to the frequency adjusting devices 71c, 71d having a large area, the adjusting range of the frequency is wider than in the case of the transducer 30.

In this manner, in the present embodiment, although adjustment of the frequency can be performed mainly by adding a mass, it is also possible to adjust the frequency of the driving oscillation or the frequency of the detecting oscillation by adding a mass in advance, and then removing part of the mass to adjust the frequency of the driving oscillation or the frequency of the detecting oscillation.

As described above, according to the present embodiment, the frequency of the driving oscillation and the frequency of the detecting oscillation can be adjusted easily into a predetermined range, whereby such problem of the prior art that the adjustment of the frequency cannot be performed satisfactorily is avoided, and hence a method of adjusting the frequency which can improve the process yield can be obtained.

Also, a method of adjusting the frequency of the transducer according to the present embodiment can be utilized not only for a gyroscopic transducer, but also for adjustment of the frequency of a resonator.

## Claims

1. A transducer comprising:
a rod-shaped oscillating reed (1a) extending along a first direction (Y), which corresponds to a center axis of rotation of the transducer, for generating a first oscillation for generating a Coriolis force corresponding to the rotation;
a beam (2) extending in a second direction (X) in parallel with a virtual plane (XY) including the oscillating reed (1a) and perpendicularly to the first direction (Y) and being connected to the oscillating reed (1a);
a first detecting unit (6) provided on the beam (2) for detecting deformation of the beam (2) due to a second oscillation of the oscillating reed (1a) caused by the Coriolis force;
a base member (5) for supporting the beam (2);
a first connecting device (3) for connecting one end of the beam (2) to the base member (5); and
a second connecting device (4) for connecting the other end of the beam (2) to the base member (5).

2. A transducer according to Claim 1, **characterized in that** a pair of rod-shaped oscillating reeds (1a, 1b) extending along said first direction (Y)are provided in parallel to each other.

3. A transducer according to Claim 2, **characterized in that** the beam (42; 52; 62) is connected at one end (42a; 52a; 62a) thereof to one of the oscillating reeds (41 a, 41 b; 51 a, 51b; 61a, 61b), and is connected at the other end (42b; 52b; 62b) thereof to the other oscillating reed 41b; 51b; 61b).

4. A transducer according to Claim 3, **characterized in that** the first connecting device (43; 53; 63) connects the point of connection between one end (42a; 52a; 62a) of the beam (42; 52; 62) and one of the oscillating reeds (41a, 41b; 51 a, 51 b; 61a, 61b) and the base member (45; 55; 65), and
the second connecting device (44; 54; 64) connects the point of connection between the other end (42b; 52b; 62b) of the beam (42; 52; 62) and the other one of the oscillating reeds (41a, 41 b; 51 a, 51 b; 61a, 61 b) and the base member (45; 55; 65).

5. A transducer according to Claim 2, **characterized in that** one end (2a) and the other end (2b) of the beam (2) are located at positions other than the portion between the pair of oscillating reeds (1a, 1b).

6. A transducer according to Claim 2, **characterized in that** the first detecting unit (6) is provided between the pair of oscillating reeds (1a, 1b).

7. A transducer according to Claim 6, **characterized by** further comprising:
a third connecting device (8) for connecting the portion of the beam (2) substantially at the center thereof to the base member (5); and
a second detecting unit (7a) provided on the beam (2) for detecting the deformation of the beam (2),
wherein the first detecting unit (6a) and the second detecting unit (7a) cooperate to perform detection for eliminating a disturbance for the rotation of the transducer in a third direction perpendicular to the virtual plane (XY).

8. A transducer according to Claim 7, **characterized in that** the first detecting unit (6a) is provided between one of the pair of oscillating reeds (1a. 1b) and the third connecting device (8), and
**in that** the second detecting unit (7a) is provided between the other one of the pair of oscillating reeds (1a, 1 b) and the third connecting device (8).

9. A transducer according to Claim 7, **characterized in that** the first detecting unit (6a) is provided between one of the pair of oscillating reeds (1a, 1b) and the third connecting device (8), and the second detecting unit (7a) is provided between one oscillating reed (1a, 1b) and either the one end or the other end of the beam (2), which is closer to the one oscillating reed (1a, 1b).

10. A transducer according to Claim 7, **characterized in that** the distance between one of the pair of oscillating reeds (1a, 1b) and the third connecting device (8) is shorter than the distance between the one oscillating reed (1a, 1b) and one of the first connecting device (3) and the second connecting device (4), which is closer to the one oscillating reed (1a. 1b).

11. A transducer according to any one of Claims 2 to 5, **characterized in that** the first detecting unit (6) is provided between one end (2a) of the beam (2) and one side of that one (1a) of the oscillating reeds (1a. 1b) that is closer to this one end (2a) of the beam (2) than the other oscillating reed (1b), said one side being the side facing away from the other oscillating reed (1b).

12. A transducer according to Claim 11, **characterized by** further comprising: a second detecting unit (7) for detecting a deformation of the beam (2), the second detecting unit (7) being provided between the other end (2b) of the beam (2) and the other oscillating reed (1b) on the side the other oscillating reed (1b) that faces away from said one oscillating reed (1a), wherein the first detecting unit (6) and the second detecting unit (7) are adapted to cooperate to perform detection for eliminating a disturbance, in a third direction (Z) perpendicular to the virtual plane (XY), of the rotation of the transducer .

13. A transducer according to any one of Claims 2 to 12, **characterized in that** the pair of oscillating reeds (1a, 1b), the beam (2), the first connecting device (3), the second connecting device (4), and the base member (5) are formed of crystal.

14. Electronic equipment comprising the transducer according to Claim 1.

15. A method of adjusting a frequency of a transducer as defined in claim 1, **characterized by** adjusting a mass on at least one of the ends of the oscillating reed (1a).

16. A method of adjusting a frequency of a transducer as defined in any one claims 2 to 13, **characterized by** adjusting a mass on at least one of the ends of one of the oscillating reeds (1a, 1 b; 201 a, 201 b, 201c).

17. The method according to Claim 15 or 16, applied to a transducer in which each oscillating reed(1a, 1b) comprises a first portion and a second portion (1c, 1d) extending from said beam (2) in opposite directions, wherein the first portion is substantially longer than the second portion (1c, 1d) **characterized in that** the frequency of the first oscillation and the frequency of the second oscillation are adjusted by adjusting the mass at the distal end (1e, 1f) of said first portion, and the difference between the two frequencies is adjusted by adjusting the mass at the distal end of the second portion (1c, 1d).

18. The method according to Claim 17, **characterized in that** the distal end of the second portion of the oscillating reeds (71 a, 71 b) is provided with a frequency adjusting device (71 c, 71 d) formed larger than the proximal end thereof, and the difference between the two frequencies is adjusted by adjusting the mass of the frequency adjusting device.
